# EUROPÄISCHE PATENTANMELDUNG

(11) **EP 2 187 331 A1**
(43) Veröffentlichungstag der Anmeldung: **19.05.2010**
(21) Anmeldenummer: 09013794.4
(22) Anmeldetag: 03.11.2009
(51) Int. Cl.: G06F 21/04

(54) **Tastatur und Verfahren zur sicheren Übertragung von Daten**

(30) Priorität: 05.11.2008 DE 102008055991
(71) Anmelder: Preh KeyTec GmbH, 97638 Mellrichstadt (DE)
(72) Erfinder: Walch, Reiner, 97702 Münnerstadt (DE); Grossmann, Bernd, 97640 Oberstreu (DE)
(74) Vertreter: Dietrich, Barbara

(57) **Zusammenfassung**

Die Erfindung betrifft eine Tastatur, insbesondere eine POS-Tastatur (Point of Sale, Point of Service), Bankentastatur, Tastatur für sichere Dateneingabe und ein Verfahren zur sicheren Übertragung von Daten, die über verschiedene Dateneingabemodule, wie zum Beispiel Magnetkartenleser, Chipkartenleser, Schlüsselschalter oder ein Tastenfeld, eingegeben werden, an ein mit der Tastatur verbundenes externes Gerät, beispielsweise ein Computer.

Die Tastatur umfasst wenigstens ein Dateneingabemodul (4, 5, 6) zum Eingeben von Daten und eine Tastatursteuervorrichtung (3) mit wenigstens einem Empfangsmittel zum Empfangen der eingegebenen Daten, einem Verschlüsselungsmittel zum Verschlüsseln der empfangenen Daten mittels eines Verschlüsselungsalgorithmus (301, 302, 303), wobei der Verschlüsselungsalgorithmus (301, 302, 303) in Form eines Programmcodes vorliegt, und einem Übertragungsmittel zum Übertragen der durch das Verschlüsselungsmittel verschlüsselten Daten an das mit der Tastatursteuervorrichtung (3) verbundene externe Gerät (2), wobei der Verschlüsselungsalgorithmus (301, 302, 303) durch den Anwender aus mehreren vorgegebenen Verschlüsselungsalgorithmen (301, 302, 303) auswählbar und dem Dateneingabemodul (4, 5, 6) zuordenbar ist.

## Beschreibung

Die Erfindung betrifft eine Tastatur, insbesondere eine POS-Tastatur (Point of Sale, Point of Service), Bankentastatur, Tastatur für sichere Dateneingabe, und ein Verfahren zur sicheren Übertragung von Daten, die über verschiedene Dateneingabemodule, wie zum Beispiel Magnetkartenleser, Chipkartenleser, Schlüsselschalter oder ein Tastenfeld, eingegeben werden, an ein mit der Tastatur verbundenes externes Gerät, beispielsweise ein Computer.

Die sichere Übertragung von Daten, die mittels einer Tastatur eingegeben werden, an ein externes Gerät, das mit der Tastatur verbunden ist, liegt in den letzten Jahren zunehmend im Blickfeld neuer Entwicklungen. Insbesondere beim Einsatz von Tastaturen in elektronischen Kassensystemen in Banken oder in POS-Terminals zur Abwicklung bargeldloser Bezahlvorgänge an einem Verkaufsort (Point of Sale) oder bei Online-Bankgeschäften beispielsweise über das Internet ist der Schutz der über die Tastatur eingegebenen Daten vor unberechtigten Zugriffen durch Dritte oberstes Gebot. Zwar bieten alle Banken und auch die meisten eShops eine sichere Datenübertragung über Verschlüsselungsprotokolle, allerdings schützt selbst eine sichere Netzwerkverbindung nicht vor dem Ausspähen der Daten durch Trojaner oder so genannte Keylogger. Keylogger sind Programme oder Geräte, die heimlich alle Tastenanschläge aufzeichnen und diese zur anschließenden Analyse an einen Dritten übertragen. Keylogger sind in der Lage, die durch Passwörter geschützten Verschlüsselungssysteme zu umgehen, indem sie die gewünschten Informationen vor der Verschlüsselung ausspähen. Keylogger können zum Beispiel als Programme auf den Computer gelangen, die manuell installiert oder über einen Virus, der über ein Netzwerk wie Internet oder Intranet empfangen wird, in das Computersystem eingeschleust werden. Als Hardware können Keylogger ebenfalls in wenigen Minuten an einem unbeaufsichtigten Computer installiert werden, indem lediglich ein kleines Gerät zwischen die Tastatur und den Computer geschaltet wird. Der Einsatz von Funktastaturen erfordert zudem nicht einmal den physischen Zugang zu einem Computer, da prinzipiell das Mithören der Daten innerhalb des Sendebereichs der drahtlosen Tastatur möglich ist.

Zur Lösung der vorstehend erläuterten Aufgabe, schlägt die amerikanische Patentanmeldung US 2007/0143593 A1 zum Beispiel eine sichere Eingabevorrichtung und ein sicheres Eingabeverfahren zum Schutz von Daten vor, die zwischen einer Eingabevorrichtung, zum Beispiel einer Tastatur, und einer Zielvorrichtung, zum Beispiel einem PC, übertragen werden. Die Vorrichtung umfasst zwei Sicherheitsmodule (Hardware), von denen eines in einer Tastatur integriert und das andere an einem Computer angebracht ist. Das erste Sicherheitsmodul empfängt Daten, die von der Tastatur zum PC übertragen werden sollen, und verarbeitet die empfangenen Daten anschließend, um eine geschützte, das heißt verschlüsselte Datenausgabe zu erzeugen. Ein zweites Sicherheitsmodul empfängt die geschützten Daten von dem ersten Sicherheitsmodul und wandelt die geschützten Daten in die Ursprungsform zurück. Die zurück gewandelten Daten werden anschließend durch das zweite Sicherheitsmodul an den PC geleitet. Das System ermöglicht einen sicheren Kommunikationskanal zwischen der Tastatur und dem PC, ohne zusätzliche Treiber oder Software zu benötigen.

Eine weitere Lösung wird in dem amerikanischen Patent US 7,366,916 B2 aufgezeigt. Das Dokument beschreibt ein Verfahren und eine Tastatur zum Schützen von Daten, die durch die Tastatur erzeugt werden. Die Daten werden von einem Tastenfeld der Tastatur erzeugt und von einem Prozessor gelesen. Anschließend werden die erzeugten Daten durch den Prozessor mittels einer Verschlüsselungsfunktion verschlüsselt und die verschlüsselten Daten von der Tastatur an einen Computer übertragen. Die Verschlüsselungsroutine kann in verschiedenen Speicherarten abgelegt sein, zum Beispiel ROM, RAM oder Flash-Speicher. Indem beispielsweise programmierbare Festwertspeicher zur Speicherung der Verschlüsselungsroutine verwendet werden, ist ein Wechsel der Verschlüsselungsroutine noch nach der Herstellung der Tastatur und zum Beispiel vor ihrem Einsatz möglich.

Die vorgenannten Systeme haben den Nachteil, dass die Verschlüsselung von einem separaten Computer etc. erfolgt, sodass hier sich Sicherheitslücken bei der Übertragung zu dem weiteren Computer auftun.

Ein rekonfigurierbares sicheres Eingabegerät beschreibt auch die EP 1 447 734 A2. Hierbei ist eine Lock-up Tabelle im System hinterlegt.

Der vorliegenden Erfindung liegt die Aufgabe zugrunde, eine Tastatur zur sicheren Übertragung von Daten aller, zu einer Tastatur gehörenden Dateneingabemodule, wie zum Beispiel Tastenfelder, Magnetkartenleser, Chipkartenleser und Schlüsselschalter, an ein mit der Tastatur verbundenes externes Gerät bereitzustellen.

Darüber hinaus ist es Aufgabe der Erfindung, ein Verfahren zur Verschlüsselung von Daten aller einer Tastatur zugeordneten Dateneingabemodule, wie zum Beispiel Tastenfelder, Magnetkartenleser, Chipkartenleser und Schlüsselschalter, an ein mit der Tastatur verbundenes externes Gerät bereitzustellen.

Diese Aufgaben werden in Bezug auf die Tastatur durch die Merkmale des Patentanspruchs 1 sowie in Bezug auf die Verschlüsselung durch die Merkmale des Patentanspruchs 10 gelöst. Weitere, besonders vorteilhafte Ausgestaltungen der Erfindung offenbaren die Unteransprüche.

Die Erfindung beruht im Wesentlichen auf dem Gedanken, Daten, die über verschiedene Dateneingabemodule eingegeben werden, die mit der Tastatur verbunden sind, durch ein Verschlüsselungsmittel einer (integrierten) Tastatursteuervorrichtung zu verschlüsseln, bevor sie an ein mit der Tastatur verbundenes externes Gerät übertragen werden. Die Verschlüsselung wird in die eigene Tastatur eingespielt, sodass die Verschlüsselung zeitgleich der Tastaturbedienung erfolgt. Das wiederum hat zur Folge, dass, das die Verschlüsselung in der Tastatur geschützt vorliegt, keine Fremdeingriffe möglich sind. Es werden keine Daten übertragen, die nicht bereits verschlüsselt sind, wenn das erwünscht wird. Der Bediener / Anwender kann individuell die in der Tastatur vorliegenden (verschiedenen) Verschlüsselungen wahlweise zuschalten oder abschalten.

In einer bevorzugten Ausführung kann durch den Anwender jedem Dateneingabemodul separat ein unterschiedlicher, vom Anwender auswählbarer Verschlüsselungsalgorithmus zugeordnet werden. Die Daten der verschiedenen Dateneingabemodule können aber auch mit einem einzigen Verschlüsselungsalgorithmus verschlüsselt werden. Außerdem kann durch den Anwender ein und derselbe Verschlüsselungsalgorithmus für die gesamte Tastatur festgelegt werden. Ferner ist die Verschlüsselung für jedes Dateneingabemodul durch den Anwender separat aktivierbar und deaktivierbar oder kann bei sicherheitsrelevanten Eingaben kurzfristig aktiviert und / oder deaktiviert werden.

Die mit der Tastatursteuervorrichtung verbundenen Dateneingabemodule senden ihre Daten stets unverschlüsselt an die Tastatursteuervorrichtung, aber innerhalb der Tastatur. Die anwenderorientierte Verschlüsselung erfolgt somit an zentraler Stelle durch die Tastatursteuervorrichtung, bevor diese die verschlüsselten Daten (wenn diese verschlüsselt werden sollten, was der Anwender festlegen kann) an ein mit der Tastatur verbundenes externes Gerät ausgibt. Dies hat den Vorteil, dass herkömmliche und marktübliche Standarddateneingabemodule verwendet werden können, die somit nicht ausgelegt sein müssen, die Daten ihrerseits zu verschlüsseln. Dadurch können die Herstellungskosten sowie der Entwicklungsaufwand einer solchen Tastatur erheblich verringert und die Tastatur mittels Konfiguration durch den Anwender leicht und flexibel an die jeweiligen Erfordernisse des Einsatzgebiets angepasst werden. Dennoch ist stets eine sichere Übertragung der durch die Dateneingabemodule eingegebenen Daten an ein externes Gerät gewährleistet. Die Daten sind bereits verschlüsselt, bevor ein Dritter sie abfangen und ausspionieren kann.

Die Verwendung herkömmlicher, marktüblicher Standarddateneingabemodule ermöglicht einerseits, die Herstellungskosten der erfindungsgemäßen Tastatur gegenüber solchen Tastaturen zu verringern, die auf den Einsatz spezieller und somit teurer Dateneingabemodule oder sonstiger teurer Spezialhardware angewiesen sind. Andererseits lässt sich der Entwicklungsaufwand für die erfindungsgemäße Tastatur durch den Einsatz von Standardeingabemodulen erheblich reduzieren, da Standardeingabemodule seit langem bekannt und zahlreich mit hoher Wahrscheinlichkeit auch zukünftig auf dem Markt verfügbar sein werden. Folglich werden Anpassungen an Spezialmodule mit beispielsweise proprietären Datenprotokollen vermieden.

Weiterhin erreicht die erfindungsgemäße Tastatur durch den Einsatz der Standardeingabemodule eine hohe Flexibilität, die bei der Anpassung an die Erfordernisse des jeweiligen Einsatzgebiets von großem Vorteil ist. Die gewünschten Dateneingabemodule können aus einer Vielzahl am Markt verfügbarer Standardeingabemodule ausgewählt und in der erfindungsgemäßen Tastatur integriert werden. Ferner kann der Anwender später die Verschlüsselungsfunktionen der erfindungsgemäßen Tastatur flexibel konfigurieren, da sich keine Beschränkungen durch fest in die Spezialmodule integrierte Verschlüsselungsfunktionen ergeben.

Da die Verschlüsselungsalgorithmen durch den Anwender wählbar und nicht durch die in der Tastatur integrierten Dateneingabemodule vorgegeben sind, lässt sich außerdem der Verschlüsselungsaufwand abhängig von den Erfordernissen des Einsatzgebiets verringern. Beispielsweise ist eine einheitliche Verschlüsslung aller Dateneingabemodule möglich. Ferner gestattet die gezielte Zuordnung eines Verschlüsselungsalgorithmus zu einem Dateneingabemodul eine optimale Anpassung des Verschlüsselungsalgorithmus an den von einem Dateneingabemodul erzeugten, charakteristischen Datenstrom. Folglich kann der Gesamtverschlüsselungsaufwand für alle Dateneingabemodule verringert werden.

Mit dem Begriff "externes Gerät" sind alle Geräte gemeint, an die die Tastatur angeschlossen werden kann. Es kann sich zum Beispiel um ein vollständig separates Gerät in einem eigenen Gehäuse handeln, wie zum Beispiel einem Personalcomputer. Es kann sich jedoch ebenfalls um ein Gerät handeln, in das die Tastatur als Baugruppe integriert ist, beispielsweise bei einer elektronischen Kasse, einem POS-Terminal oder einem Zentralrechner in einer Bank.

Weitere Einzelheiten und Vorteile der Erfindung ergeben sich aus den folgenden, anhand von Figuren erläuterten Ausführungsbeispielen. Es zeigen:

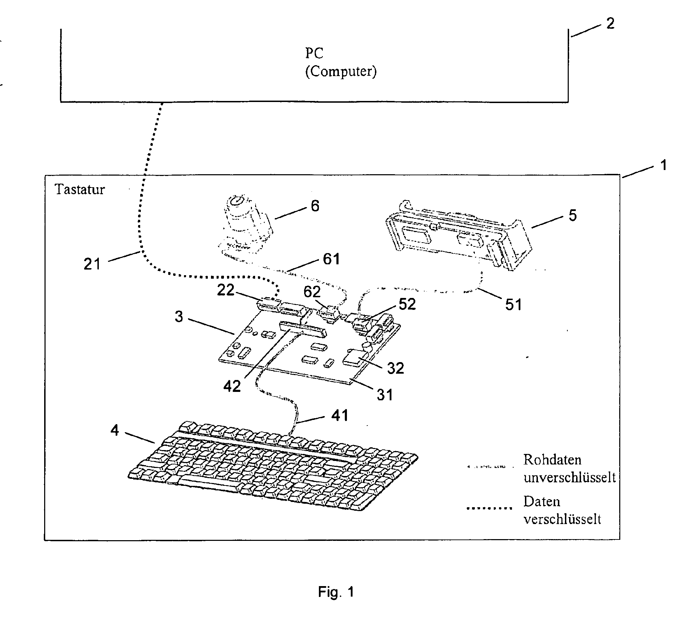

- Fig. 1: eine Explosionsansicht zur Erläuterung des Aufbaus einer Ausführungsform der erfindungsgemäßen Tastatur,

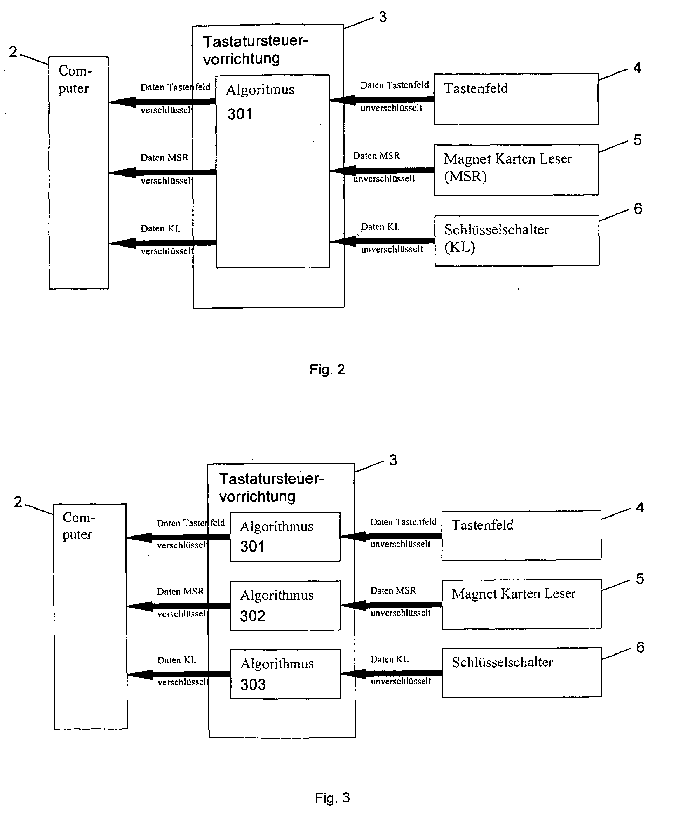

- Fig. 2: ein Blockdiagramm zur Erläuterung einer ersten Zuordnung zwischen den eingegebenen Daten verschiedener Dateneingabemodule der in Fig.1 dargestellten Ausführungsform der erfindungsgemäßen Tastatur, einem für die Verschlüsselung verwendeten Verschlüsselungsalgorithmus und den von der erfindungsgemäßen Tastatur ausgegebenen Daten,
- Fig. 3: ein Blockdiagramm zur Erläuterung einer zweiten Zuordnung zwischen den eingegebenen Daten der verschiedenen Dateneingabemodule der in Fig.1 dargestellten Ausführungsform der erfindungsgemäßen Tastatur, mehreren für die Verschlüsselung verwendeten Verschlüsselungsalgorithmen und den von der erfindungsgemäßen Tastatur ausgegebenen Daten und

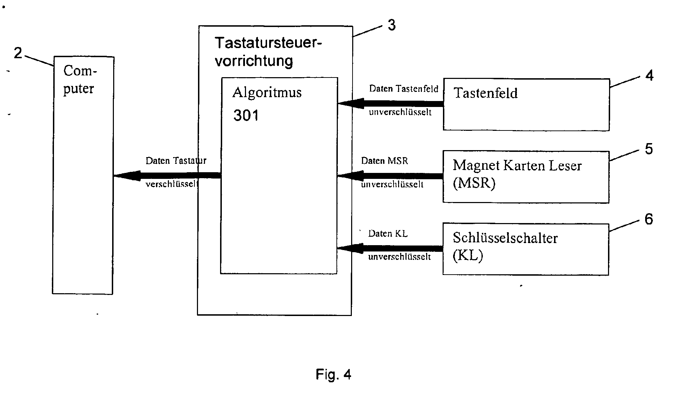

- Fig. 4: ein Blockdiagramm zur Erläuterung einer dritten Zuordnung zwischen den eingegebenen Daten der verschiedenen Dateneingabemodule der in Fig.1 dargestellten Ausführungsform der erfindungsgemäßen Tastatur, einem für die Verschlüsselung verwendeten Verschlüsselungsalgorithmus und den von der erfindungsgemäßen Tastatur ausgegebenen Daten.

Alle für die Erfindung nicht wesentlichen Bestandteile der Tastatur gemäß der vorliegenden Erfindung wurden der Einfachheit halber in den Zeichnungen nicht dargestellt.

Fig. 1 stellt eine Explosionsansicht des Aufbaus einer Ausführungsform der erfindungsgemäßen Tastatur dar. Ein Gehäuse oder dergleichen, in dem die Tastatur 1 mit ihren im Folgenden beschriebenen Komponenten üblicherweise untergebracht ist, ist in Fig. 1 nicht dargestellt. Dem Fachmann sind Gehäuse zur Aufnahme der Tastatur 1 gemäß der vorliegenden Erfindung allgemein bekannt.

Die Tastatur 1 umfasst im Wesentlichen eine Tastatursteuervorrichtung 3 und ein oder mehrere Dateneingabemodule 4, 5 und 6. Die Dateneingabemodule 4, 5 und 6 sind über entsprechende Datenübertragungsverbindungen 41, 51 und 61 mit der Tastatursteuervorrichtung 3 verbunden. Die Tastatursteuervorrichtung 3 umfasst eine Leiterplatte 31, auf der verschiedene elektronische Bauelemente, wie zum Beispiel Mikroprozessoren, Arbeitsspeicher (RAM), Festwertspeicher (ROM) und/oder programmierbare Festwertspeicher (zum Beispiel EEPROM oder Flash- PROM) usw. angeordnet und miteinander verschaltet sind, um herkömmliche Tastaturfunktionen realisieren zu können, einschließlich der Verarbeitung der über die Dateneingabemodule 4, 5 und 6 eingegebenen Daten sowie die Übertragung dieser Daten an ein externes Gerät 2. Die Steuerung dieser Tastaturfunktionen wird im Allgemeinen durch eine Software realisiert, die in der Tastatursteuervorrichtung 3 ausgeführt wird. Die verschiedenen elektronischen Bauelemente sind in Fig. 1 nicht im Einzelnen dargestellt, sondern lediglich schematisch angedeutet, da der allgemeine Aufbau einer derartigen Tastatursteuerelektronik, wie sie auch in der Ausführungsform der vorliegenden Erfindung zum Einsatz gelangt, allgemein aus dem Stand der Technik bekannt ist. Daher wird im Folgenden auf eine detaillierte Beschreibung des elektronischen Aufbaus der weiteren Tastatursteuerelektronik 32 verzichtet.

Auf der Tastatursteuervorrichtung 3 sind ferner verschiedene Modulschnittstellen 42, 52 und 62 angeordnet. Die Datenübertragungsverbindungen 41, 51 und 61 der entsprechenden Dateneingabemodule 4, 5 und 6 sind mit den zugehörigen Modulschnittstellen 42, 52 und 62 verbunden. Ferner umfasst die Tastatursteuervorrichtung 3 eine Tastaturschnittstelle 22, mit der das externe Gerät 2 über eine Datenübertragungsverbindung 21 verbunden ist. Es ist zu beachten, dass die in Fig. 1 dargestellte Datenübertragungsverbindung 21 nicht auf eine leitungsgebundene Verbindung beschränkt ist, sondern ebenfalls drahtlose Übertragungsverfahren, wie sie dem Fachmann allgemein bekannt sind, zwischen der Tastatur 1 und dem externen Gerät 2 umfasst.

Die Dateneingabemodule 4, 5 und 6 dienen der Eingabe von Daten. In Fig. 1 sind als Dateneingabemodule beispielhaft ein Tastenfeld 4, ein Magnetkartenleser 5 und ein Schlüsselschalter 6 dargestellt. Der Magnetkartenleser 5 und der Schlüsselschalter 6 sind optionale Dateneingabemodule. Optionale Dateneingabemodule sind für die Ausführung der erfindungsgemäßen Tastatur nicht zwingend erforderlich und können je nach Erfordernis des Einsatzgebiets wahlweise und in unterschiedlicher Kombination in der Tastatur 1 integriert sein. Weitere optionale Dateneingabemodule zum Anschluss an die Tastatursteuervorrichtung 3 können neben den in Fig. 1 dargestellten Dateneingabemodulen zum Beispiel auch Chipkartenleser, Spezialtastenfelder (zum Beispiel PIN-Pad oder Zehnerblock), Barcodescanner, USB-Geräte und weitere, dem Fachmann allgemein bekannte Dateneingabevorrichtungen sein.

Die über die Dateneingabemodule 4, 5 und 6 eingegebenen Daten werden unverschlüsselt über die entsprechenden Datenübertragungsverbindungen 41, 51 und 61 an die Tastatursteuervorrichtung 3 übertragen. In der Tastatursteuervorrichtung 3 sind entsprechende Empfangsmittel bereitgestellt, die die über die Datenübertragungsverbindungen 41, 51 und 61 gesendeten Daten an den jeweiligen Modulschnittstellen 42, 52 und 62 empfangenen. Von dem Empfangsmittel werden die Daten an ein Verschlüsselungsmittel weitergeleitet, das in der Tastatursteuervorrichtung 3 bereitgestellt ist. Das Verschlüsselungsmittel ist zum Beispiel eine Komponente der bereits oben erwähnten Software zur Steuerung der Tastaturfunktionen. Das Verschlüsselungsmittel verschlüsselt die empfangenen Daten mittels eines Verschlüsselungsalgorithmus 301, 302 oder 303. Der Verschlüsselungsalgorithmus 301, 302 oder 303 liegt dem Verschlüsselungsmittel in Form eines Programmcodes vor. Nach der Verschlüsselung werden die Daten einem in der Tastatursteuervorrichtung 3 bereitgestellten Übertragungsmittel zugeführt, das die verschlüsselten Daten über die Tastaturschnittstelle 22 ausgibt. Diese Daten werden anschließend über die Datenübertragungsverbindung 21 an das externe Gerät 2 übertragen. Somit ist stets eine sichere Übertragung aller über die Dateneingabemodule 4, 5 und 6 eingegebenen Daten an das externe Gerät 2 gewährleistet.

Der von der Tastatursteuervorrichtung 3 verwendete Verschlüsselungsalgorithmus kann von dem Anwender aus mehreren vorgegebenen Verschlüsselungsalgorithmen 301, 302 und 303 ausgewählt werden. Ferner kann der Anwender jedem Dateneingabemodul einen Verschlüsselungsalgorithmus 301, 302 und 303 separat zuordnen, das heißt, der von den unterschiedlichen Dateneingabemodulen 4, 5 und 6 generierte Datenstrom wird jeweils von dem zugeordneten Verschlüsselungsalgorithmus 301, 302 oder 303 verschlüsselt. Außerdem kann der Anwender die Verschlüsselung der Dateneingabemodule 4, 5 und 6 einzeln aktivieren und deaktivieren. Darüber hinaus kann die Verschlüsselung auch während des Betriebs der Tastatur bei sicherheitsrelevanten Eingaben kurzfristig aktiviert und/oder deaktiviert werden. Dies kann zum Beispiel durch einen Steuerbefehl von dem externen Gerät 2 erfolgen. Ebenso kann die Aktivierung/Deaktivierung durch den Anwender mittels einer speziell bereitgestellten Taste auf dem Tastenfeld, einer von der Tastatursteuervorrichtung eindeutig identifizierbaren Tastenkombination, die während der normalen Eingabeoperationen nicht verwendet wird, oder durch Einführen einer Magnet- oder Chipkarte in die entsprechende Dateneingabevorrichtung oder durch sonstige manuelle Eingaben an einem der Dateneingabemodule ausgeführt werden.

Die Konfiguration der Tastatursteuervorrichtung 3 durch den Anwender erfolgt mit einem Konfigurationsprogramm, das auf dem mit der Tastatur verbundenen externern Gerät 2 ausgeführt wird.

Die einzelnen Zuordnungsmöglichkeiten der durch den Anwender wählbaren Verschlüsselungsalgorithmen 301, 302 und 303 zu den jeweiligen Dateneingabemodulen sind grafisch in den Figuren 2 bis 4 veranschaulicht.

Fig. 2 ist ein Blockdiagramm, das eine erste Zuordnung zwischen den eingegebenen Daten der verschiedenen Dateneingabemodule 4, 5 und 6 der in Fig.1 dargestellten Ausführungsform der erfindungsgemäßen Tastatur 1, einem für die Verschlüsselung verwendeten Verschlüsselungsalgorithmus 301 und den von der erfindungsgemäßen Tastatur 1 ausgegebenen Daten erläutert. Wie in Fig. 2 dargestellt ist, werden die durch die Dateneingabemodule 4, 5 und 6 eingegebenen Daten unverschlüsselt und in getrennten Datenströmen an die Tastatursteuervorrichtung 3 übertragen. Das Verschlüsselungsmittel der Tastatursteuervorrichtung 3 ist in Fig. 2 derart konfiguriert, dass ein einziger Verschlüsselungsalgorithmus 301 alle Daten der Dateneingabemodule 4, 5, und 6 verschlüsselt. Die verschlüsselten Daten werden anschließend in separaten Datenströmen von der Tastatursteuervorrichtung 3 an das externe Gerät 2 übertragen. Fig. 2 stellt somit den Fall dar, in dem die eingegebenen Daten jedes einzelnen Dateneingabemoduls 4, 5 und 6 mit einem einzigen Verschlüsselungsalgorithmus 301 verschlüsselt und anschließend separat an das externe Gerät 2 übertragen werden.

Fig. 3 ist ein Blockdiagramm, das eine zweite Zuordnung zwischen den eingegebenen Daten der verschiedenen Dateneingabemodule 4, 5 und 6 der in Fig.1 dargestellten Ausführungsform der erfindungsgemäßen Tastatur 1, mehreren für die Verschlüsselung verwendeten Verschlüsselungsalgorithmen 301, 302 und 303 und den von der erfindungsgemäßen Tastatur 1 ausgegebenen Daten erläutert. Wie Fig. 3 veranschaulicht, werden die durch die Dateneingabemodule 4, 5 und 6 eingegebenen Daten unverschlüsselt und in getrennten Datenströmen an die Tastatursteuervorrichtung 3 übertragen. Das Verschlüsselungsmittel der Tastatursteuervorrichtung 3 ist in Fig. 3 derart konfiguriert, dass unterschiedliche Verschlüsselungsalgorithmen 301, 302 und 303 jeweils einem Dateneingabemodul 4, 5 und 6 zugeordnet sind. Die Daten der Dateneingabemodule 4, 5, und 6 werden folglich mit den entsprechend zugeordneten Verschlüsselungsalgorithmen 301, 302 und 303 verschlüsselt. Die verschlüsselten Daten werden anschließend in separaten Datenströmen von der Tastatursteuervorrichtung 3 an das externe Gerät 2 übertragen. Fig. 3 stellt somit den Fall dar, in dem die eingegebenen Daten jedes einzelnen Dateneingabemoduls 4, 5 und 6 mit unterschiedlichen Verschlüsselungsalgorithmen 301, 302 und 303 verschlüsselt und anschließend separat an das externe Gerät 2 übertragen werden.

Fig. 4 ist ein Blockdiagramm, das eine dritte Zuordnung zwischen den eingegebenen Daten der verschiedenen Dateneingabemodule 4, 5 und 6 der in Fig.1 dargestellten Ausführungsform der erfindungsgemäßen Tastatur 1, einem für die Verschlüsselung verwendeten Verschlüsselungsalgorithmus 301 und den von der erfindungsgemäßen Tastatur 1 ausgegebenen Daten erläutert. Wie in Fig. 2 dargestellt ist, werden die durch die Dateneingabemodule 4, 5 und 6 eingegebenen Daten unverschlüsselt und in getrennten Datenströmen an die Tastatursteuervorrichtung 3 übertragen. Das Verschlüsselungsmittel der Tastatursteuervorrichtung 3 ist in Fig. 4 derart konfiguriert, dass ein einziger Verschlüsselungsalgorithmus 301 alle Daten der Dateneingabemodule 4, 5, und 6 verschlüsselt. Die verschlüsselten Daten werden anschließend in einem gemeinsamen Datenstrom, in dem alle von den Dateneingabemodulen 4, 5 und 6 empfangenen Daten enthalten sind, von der Tastatursteuervorrichtung 3 an das externe Gerät 2 übertragen. Fig. 4 stellt somit den Fall dar, in dem die gesamten eingegebenen Daten der Tastatur 1 mit einem einzigen Verschlüsselungsalgorithmus 301 verschlüsselt und anschließend in einem gemeinsamen Datenstrom an das externe Gerät 2 übertragen werden.

Für die Verschlüsselung der über die Dateneingabemodule 4, 5 und 6 eingegebenen Daten mittels der Verschlüsselungsalgorithmen 301, 302 und 303 sind ein oder mehrere Schlüssel erforderlich. Diese Schlüssel können über eine Konfiguration in die Tastatursteuervorrichtung 3 geschrieben und dort dauerhaft gespeichert sein. Ferner können die Schlüssel auch während des Betriebs der Tastatur 1 mittels einer Anwendung geändert werden. Weiterhin ist es möglich, dass die Tastatursteuervorrichtung 3 die Schlüssel zufällig auswählt, wobei ein Index zu einer bekannten Schlüsseltabelle an die Tastatursteuervorrichtung 3 übertragen wird. Ferner können die Schlüssel für das Verschlüsselungsverfahren auch einen geheimen und einen öffentlichen Schlüssel umfassen. Schließlich ist auch die Eingabe eines Schlüssels durch den Anwender möglich, der anschließend für die Verschlüsselung der Daten verwendet wird. Die vorgenannten einzelnen Möglichkeiten hinsichtlich der Verwendung der Schlüssel für die Verschlüsselung können bei der erfindungsgemäßen Tastatur 1 ebenfalls in einer beliebigen Kombination zum Einsatz gelangen.

Die vorliegende Erfindung ist selbstverständlich nicht auf das vorstehend beschriebene Ausführungsbeispiel beschränkt. So kann die Tastatur beispielsweise auch mittels einer drahtlosen Verbindungstechnik (zum Beispiel Funkübertragung) an das / die externe(n) Gerät(e) angeschlossen sein.

Außerdem können einzelne Bauteile, zum Beispiel Dateneingabemodule, entfallen oder weitere elektronische Komponenten wie LEDs hinzugefügt werden. Selbstverständlich können weitere Dateneingabemodule - auch mehrere desselben Typs - außer jenen, die in dem in Fig. 1 erläuterten Ausführungsbeispiel beschrieben sind, an die Tastatursteuervorrichtung angeschlossen werden. So kann die Tastatur neben einem Tastenfeld beispielsweise mit einem weiteren Tastenfeld wie einem Ziffernblock (Zehnerblock) oder einem dem jeweiligen Einsatzgebiet angepassten Spezialtastenfeld, zum Beispiel einem PIN-Pad, bereitgestellt sein. Beispielsweise ist die Verwendung von Barcodescannern oder USB-Geräten als Dateneingabemodule sowie weitere, dem Fachmann allgemein bekannte Dateneingabevorrichtungen vorstellbar. Ferner ist die erfindungsgemäße Tastatur nicht darauf beschränkt, dass die Dateneingabemodule in der Tastatur, das heißt innerhalb des Tastaturgehäuses, integriert sind. Ebenso könnten die Dateneingabemodule auch über extern an dem Tastaturgehäuse zugängliche Modulschnittstellen mit der Tastatur verbunden sein.

Ferner kann die Tastatur derart gestaltet sein, dass die Konfiguration der Tastatursteuervorrichtung mittels des Konfigurationsprogramms über ein Netzwerk bzw. über das Internet per Fernwartung erfolgt. Ebenso ist eine Konfiguration der Tastatursteuervorrichtung über ein an die Tastatur angeschlossenes Dateneingabemodul, wie zum Beispiel einen Chipkartenleser, denkbar, wobei dann die Konfigurationseinstellungen in einer in den Chipkartenleser einzuführenden Chipkarte beinhaltet wären. Ebenso ist eine Konfiguration der Tastatur auch direkt über das Tastenfeld der Tastatur vorstellbar. In diesem Fall könnte eine Anzeigevorrichtung, zum Beispiel eine LCD-Anzeige, in der Tastatur integriert sein, mit deren Hilfe der Anwender die Konfiguration über Eingaben am Tastenfeld direkt ausführen könnte.

Darüber hinaus sind weitere Zuordnungskombinationen zwischen den Dateneingabemodulen, den Verschlüsselungsalgorithmen und den an das externe Gerät übertragenen verschlüsselten Daten möglich als in dem Ausführungsbeispiel in den Figuren 2 bis 4 beschrieben sind. So können die Dateneingabemodule beispielsweise in unterschiedliche Klassen eingeteilt werden und die Verschlüsselungsalgorithmen den jeweiligen Klassen anstatt einzelner Dateneingabemodule zugeordnet werden.

### BEZUGSZEICHENLISTE

- 1: Tastatur
- 2: Externes Gerät, Computer, PC
- 3: Tastatursteuervorrichtung
- 4: Tastenfeld
- 5: Magnetkartenleser
- 6: Schlüsselschalter
- 21: Verschlüsselte Datenleitung
- 22: Tastaturschnittstelle
- 31: Leiterplatte
- 32: Elektronische Bauelemente
- 41: Unverschlüsselte Datenleitung 1
- 42: Modulschnittstelle 1
- 51: Unverschlüsselte Datenleitung 2
- 52: Modulschnittstelle 2
- 61: Unverschlüsselte Datenleitung 3
- 62: Modulschnittstelle 3
- 301: Verschlüsselungsalgorithmus 1
- 302: Verschlüsselungsalgorithmus 2
- 303: Verschlüsselungsalgorithmus 3

## Patentansprüche

1. Tastatur (1) zur sicheren Übertragung von Daten an wenigstens ein mit der Tastatur (1) verbundenes externes Gerät (2), wobei die Tastatur (1) wenigstens ein Dateneingabemodul (4, 5, 6) zum Eingeben von Daten und eine Tastatursteuervorrichtung (3) umfasst, die Tastatursteuervorrichtung (3) wenigstens ein Verschlüsselungsmittel zum Verschlüsseln der Daten mittels eines Verschlüsselungsalgorithmus (301, 302, 303) aufweist, der Verschlüsselungsalgorithmus (301, 302, 303) durch den Anwender aus mehreren vorgegebenen Verschlüsselungsalgorithmen (301, 302, 303) auswählbar und dem Dateneingabemodul (4, 5, 6) zuordenbar ist, sodass die wahlweise Verschlüsselung in der Tastatur (1) zeitgleich der Tastaturbedienung erfolgen kann.

2. Tastatur nach Anspruch 1, **dadurch gekennzeichnet, dass** der Verschlüsselungsalgorithmus (301, 302, 303) in Form eines Programmcodes vorliegt.

3. Tastatur nach Anspruch 1 oder 2, **dadurch gekennzeichnet, dass** die Verschlüsselung während des Betriebs der Tastatur (1) aktivierbar und deaktivierbar ist.

4. Tastatur nach einem der Ansprüche 1 bis 3, **dadurch gekennzeichnet, dass** die Tastatursteuervorrichtung (3) durch den Anwender mittels eines auf dem externen Gerät (2) ausgeführten Konfigurationsprogramms konfigurierbar ist, wobei der Verschlüsselungsalgorithmus (301, 302, 303) durch den Anwender mittels des auf dem externen Gerät (2) ausgeführten Konfigurationsprogramms für jedes Dateneingabemodul (4, 5, 6) auswählbar ist.

5. Tastatur nach Anspruch 3 oder 4, **dadurch gekennzeichnet, dass** durch den Anwender mittels des auf dem externen Gerät (2) ausgeführten Konfigurationsprogramms jedem Dateneingabemodul (4, 5, 6) ein unterschiedlicher Verschlüsselungsalgorithmus (301, 302, 303) zuordenbar ist, jedem Dateneingabemodul (4, 5, 6) ein und derselbe Verschlüsselungsalgorithmus (301, 302, 303) zuordenbar ist und der gesamten Tastatur (1) ein und derselbe Verschlüsselungsalgorithmus (301, 302, 303) zuordenbar ist.

6. Tastatur nach einem der Ansprüche 3 bis 5, **dadurch gekennzeichnet, dass** die Verschlüsselung durch den Anwender mittels des auf dem externen Gerät (2) ausgeführten Konfigurationsprogramms für jedes Dateneingabemodul (4, 5, 6) separat aktivierbar und deaktivierbar ist.

7. Tastatur nach einem der Ansprüche 1 bis 6, **dadurch gekennzeichnet, dass** ein Schlüssel zur Verschlüsselung durch das Verschlüsselungsmittel mittels Konfigurieren in die Tastatursteuervorrichtung (3) schreibbar und dort dauerhaft speicherbar ist und/oder während des Betriebs mittels einer Anwendung änderbar ist und/oder zufällig von der Tastatursteuervorrichtung (3) auswählbar ist, wobei ein Index zu einer bekannten Schlüsseltabelle übertragbar ist, und/oder ein geheimer und ein öffentlicher Schlüssel ist und/oder ein einzugebender Schlüssel des Anwenders ist.

8. Tastatur nach einem der Ansprüche 1 bis 7, **dadurch gekennzeichnet, dass** die Tastatur (1) eine POS-Tastatur, Bankentastatur oder Tastatur für sichere Dateneingabe ist und das Dateneingabemodul (4, 5, 6) ein Tastenfeld (4) und/oder ein Magnetkartenleser (5) und/oder ein Schlüsselschalter (6) und/oder ein Chipkartenleser ist.

9. Verfahren zur sicheren Übertragung von Daten einer Tastatur (1) an ein mit der Tastatur (1) verbundenes externes Gerät (2), wobei das Verfahren wenigstens die folgenden Schritte umfasst:
- Eingeben von Daten in wenigstens ein Dateneingabemodul (4, 5, 6),
- Empfangen der Daten durch eine Tastatursteuervorrichtung (3);
- Verschlüsseln der Daten durch ein Verschlüsselungsmittel der Tastatursteuervorrichtung (3) mittels eines durch den Anwender wählbaren Verschlüsselungsalgorithmus (301, 302, 303), wobei
- der Verschlüsselungsalgorithmus (301, 302, 303) durch den Anwender aus mehreren vorgegebenen Verschlüsselungsalgorithmen (301, 302, 303) ausgewählt und dem Dateneingabemodul (4, 5, 6) zugeordnet wird und
- die wahlweise Verschlüsselung in der Tastatur (1) zeitgleich der Dateneingabebedienung erfolgt.

10. Verfahren nach Anspruch 9, **dadurch gekennzeichnet, dass** die Verschlüsselung während des Betriebs der Tastatur (1) aktiviert und deaktiviert wird.

11. Verfahren nach einem der Ansprüche 9 oder 10, **dadurch gekennzeichnet, dass** die Tastatursteuervorrichtung (3) durch den Anwender mittels eines auf dem externen Gerät (2) ausgeführten Konfigurationsprogramms konfiguriert wird.

12. Verfahren nach Anspruch 11, **dadurch gekennzeichnet, dass** der Verschlüsselungsalgorithmus (301, 302, 303) durch den Anwender mittels des auf dem externen Gerät (2) ausgeführten Konfigurationsprogramms für jedes Dateneingabemodul (4, 5, 6) ausgewählt wird.

13. Verfahren nach Anspruch 11 oder 12, **dadurch gekennzeichnet, dass** die Tastatursteuervorrichtung (3) durch den Anwender mittels des auf dem externen Gerät (2) ausgeführten Konfigurationsprogramms derart konfiguriert wird, dass die Verschlüsselung mit unterschiedlichen Verschlüsselungsalgorithmen (301, 302, 303) für jedes Dateneingabemodul (4, 5, 6) durchgeführt wird, die Verschlüsselung mit ein und demselben Verschlüsselungsalgorithmus (301, 302, 303) für jedes Dateneingabemodul (4, 5, 6) durchgeführt wird oder die Verschlüsselung durch das Verschlüsselungsmittel mit ein und demselben Verschlüsselungsalgorithmus (301, 302, 303) für die gesamte Tastatur (1) durchgeführt wird.

14. Verfahren nach einem der Ansprüche 9 bis 13, **dadurch gekennzeichnet, dass** die Verschlüsselung durch den Anwender mittels des auf dem externen Gerät (2) ausgeführten Konfigurationsprogramms für jedes Dateneingabemodul (4, 5, 6) separat aktiviert und deaktiviert wird.

15. Verfahren nach einem der Ansprüche 9 bis 14, **dadurch gekennzeichnet, dass** ein Schlüssel zur Verschlüsselung durch das Verschlüsselungsmittel mittels Konfigurieren in die Tastatursteuervorrichtung (3) geschrieben und dort dauerhaft gespeichert wird und/oder während des Betriebs mittels einer Anwendung geändert wird und/oder zufällig von der Tastatursteuervorrichtung (3) ausgewählt wird, wobei ein Index zu einer bekannten Schlüsseltabelle übertragen wird, und/oder ein geheimer und ein öffentlicher Schlüssel ist und/oder ein einzugebender Schlüssel des Anwenders ist.
